# FASCICULE DE BREVET EUROPEEN

(11) **EP 0 765 463 B1**
(45) Date de publication et mention de la délivrance du brevet: **10.05.2000**
(21) Numéro de dépôt: 95919598.3
(22) Date de dépôt: 12.06.1995
(51) Int. Cl.: G01C 15/00, G01S 5/16

(54) **PROCEDE DE REPERAGE D'UN TRIEDRE DANS L'ESPACE**
VERFAHREN ZUM LOKALISEREN EINES TRIEDERS IM RAUM
METHOD FOR SPATIALLY LOCATING A TRIHEDRON

(30) Priorité: 17.06.1994 FR 9407462
(43) Date de publication de la demande: 02.04.1997
(73) Titulaire: Eaton, Homer, Carlsbad, CA 92008 (US)
(72) Inventeur: Eaton, Homer, Carlsbad, CA 92008 (US)
(74) Mandataire: Jaunez, Xavier
(86) Numéro de dépôt international: IB9500462
(87) Numéro de publication internationale: WO9535479

(56) Documents cités:
- EP-A- 0 143 012
- EP-A- 0 468 677
- WO-A-87/01814
- FR-A- 2 676 544
- GB-A- 1 181 162

## Description

La présente invention concerne, de manière générale, un procédé de repérage positionnel d'un trièdre dans l'espace, c'est-à-dire un procédé permettant non seulement de relever, par rapport à une référentiel fixe, la position de l'origine du trièdre mais également l'orientation de ses trois axes.

Dans le domaine particulier des techniques de mesure de forme et/ou de position d'un objet à l'aide d'une machine tridimensionnelle, on cherche de plus en plus à réaliser des machines qui sont à la fois compactes, légères et précises. Ce problème devient par exemple particulièrement aigu dans le cas de mesures de positions d'objets à l'intérieur d'une carrosserie de véhicule automobile.

Les machines conçues il y a une vingtaine d'années étaient en effet encombrantes et coûteuses (voire par exemple les documents US-A-3 774 312, US-A-3 774 311, US-A-3 636 635, US-A-3 279 079). De plus, ces machines étaient d'application limitée, car la taille de la machine détermine la taille des objets qui peuvent être mesurés, et le coût de la machine augmente rapidement avec sa taille. En raison des difficultés pour maintenir la précision de positionnement et de déplacement d'éléments en porte-à-faux, les machines de ce type doivent en outre être entièrement massives pour que leur rigidité soit suffisante, de sorte que la mesure d'objets de dimensions importantes (en longueur ou en hauteur) oblige à utiliser des machines encombrantes, lourdes et coûteuses.

Des machines plus simples et plus maniables ont été proposées, conne illustré dans les documents US-A-3 944 798, GB-A-1 498 009, ou plus récemment dans le document FR-A-2597969. Ces machines sont en général constituées par un support et un bras déformable formé de bras articulés, avec un capteur de contact monté en extrémité du dernier bras. L'ensemble ainsi formé est relié à un calculateur qui exploite les renseignements fournis par le capteur et par des détecteurs de position associés aux bras articulés. Cependant, ces machines ont de facto des possibilités plus réduites en longueur accessible et les volumes mesurables sont en général limités à un mètre environ du support du bras déformable. De ce fait, si l'on veut effectuer des mesures dans une zone plus éloignée, il faut déplacer le support. Le problème se pose alors du repérage de ce support dans l'espace car, pour relier à un référentiel fixe les séries de mesures effectuées pour une position donnée du support, il faut connaître la position et l'orientation de ce support par rapport à ce référentiel.

On connaît par ailleurs des techniques de repérage positionnel par triangulation.

Par exemple, le document EP-A-0 143 012 décrit une machine de mesure tridimensionnelle comportant un socle fixe et une tête de mesure mobile dans un plan horizontal. La tête de mesure comporte d'une part un capteur de distance à faisceau laser vertical éclairant le point concerné pour en mesurer l'éloignement par rapport à la tête de mesure, et d'autre part un moyen de repérage positionnel de la tête dans le plan horizontal. Ce moyen de repérage positionnel comporte une source laser montée pivotante autour d'un axe vertical sur la tête de mesure pour éclairer successivement trois cibles fixes disposées dans le plan pour délivrer un signal témoignant de leur éclairement par le rayon issu de la source laser. La position angulaire de la source laser autour de son axe de rotation vertical est mesurée par un capteur de position associé qui, lorsque les cibles sont éclairées, relève les positions angulaires correspondantes de la source. A partir de ces informations et de celles relatives aux positions des cibles, une unité de traitement électronique calcule la position de la tête de mesure dans le plan horizontal. Toutefois, cette installation est strictement limitée à l'utilisation en 2D.

De même, les documents GB-A-1 181 162 et US-A-5,258,822 décrivent des dispositifs d'assistance à la navigation permettant le repérage positionnel d'un mobile tel qu'un avion, un bateau ou un véhicule terrestre, dans un plan horizontal. Ces dispositifs comportent, comme précédemment, une source laser mobile en rotation autour d'un axe vertical pour éclairer successivement trois cibles disposées à des positions fixes connues en vue de calculer par triangulation, à partir des trois positions angulaires correspondantes de la source laser, les coordonnées du mobile dans le plan horizontal. Mais ici encore, ce type de dispositif ne permet de repérer, ni l'altitude du mobile, ni son orientation dans l'espace.

Le document EP-A-0 468 677 décrit un procédé et un dispositif de repérage positionnel d'un objet dans l'espace capable de déterminer la position de cet objet ainsi que son orientation. Ce dispositif comporte un module d'émission comprenant une source lumineuse mobile en rotation autour de deux axes distincts non parallèles entre eux (azimut et zénith) auxquels sont associés des capteurs de position angulaire. Trois cibles sont disposées autour du module d'émission en des emplacements connus et la position angulaire de la source lumineuse (azimut et zénith) est relevée pour l'éclairement de chacune des cibles. Une unité de traitement électronique calcule, à partir de ces informations et de celles relatives aux emplacements connus des cibles, la position et l'orientation du module d'émission. Avec un tel procédé, il est donc possible de repérer la position et l'orientation d'un support de machine de mesure tridimensionnelle dans l' espace.

Toutefois, dans tous les disositifs précités, la précision du repérage dépend de la précision de la mesure des coordonnées des cibles ainsi que des différents paramètres du système de repérage, en particulier des paramètres relatifs à l'étalonnage des capteurs de position angulaire de la source lumineuse.

Un but de l'invention est précisément de résoudre ce problème en proposant une technique de repérage positionnel d'un trièdre dans l'espace permettant un repérage extrêmement précis et fiable.

Il s'agit plus particulièrement d'un procédé de repérage positionnel d'un trièdre dans l'espace qui comporte les étapes suivantes :
- on met en place un module d'émission comprenant un socle fixe par rapport au trièdre à repérer, une source de rayon lumineux montée sur le socle en pouvant pivoter autour de deux axes distincts non parallèles entre eux, et deux capteurs de position angulaire associés aux mouvements de rotation correspondants de la source par rapport au socle;
- on dispose autour du module d'émission, en des emplacements définis par rapport à un référentiel fixe, une pluralité de cibles aptes à délivrer un signal électrique témoignant de leur éclairement par le rayon lumineux émis par la source ;
- on fait pivoter la source du module d'émission autour de l'un au moins des deux axes de rotation, le socle du module restant fixe, de façon à diriger successivement le rayon lumineux émis vers chacune des cibles de sorte que le signal délivré par chaque cible éclairée provoque la mémorisation des deux angles correspondants mesurés, pour ladite cible, par les deux capteurs de position angulaire de la source du module d'émission ;
- on détermine par calcul, à partir de ces angles et des coordonnées des emplacements définis des cibles, la position du trièdre dans le référentiel fixe.

Selon la caractéristique essentielle de l'invention, les emplacements des cibles sont définis dans le référentiel fixe lors d'une étape préliminaire de calibrage au cours de laquelle :
- on mémorise, pour une pluralité de positions différentes du socle du module d'émission, les deux angles correspondant à l'éclairement successif de chacune des cibles;
- on en déduit par calcul les positions relatives des cibles entre elles ;
- on mesure et on mémorise la distance entre deux points remarquables, tels que deux cibles ou deux positions du socle, afin de fixer l'échelle dimensionnelle.

Le procédé de repérage de la présente invention permet donc de déterminer avec une très grande précision la position d'un trièdre dans l'espace sans que l'objet auquel il se rattache ne soit relié à aucun élément mécanique. Cette absence de liaison mécanique procure une très grande liberté de mouvement à l'objet dont on repère la position. Dans le cas où cet objet est un support mobile de machine de mesure tridimensionnelle, cette faculté offre une solution particulièrement bien adaptée au problème mentionné précédemment de la limitation des volumes mesurables.

Selon une variante particulière du procédé de l'invention, les cibles sont disposées dans un plan commun, en particulier un plan horizontal. On utilise alors pour l'étape préliminaire de calibrage, au moins quatre cibles et six positions différentes du socle du module d'émission.

Selon une autre caractéristique particulière du procédé de l'invention, procédé dans lequel chaque cible inclut un écran de détection photo-électrique de surface sensiblement plus grande que la section du rayon lumineux pour fournir un signal donnant la position de l'impact du rayon lumineux sur cet écran par rapport à une origine fixe dudit écran, on combine, pour chaque cible éclairée successivement, le signal issu de l'écran de cette cible avec les signaux issus des deux capteurs de position angulaire de la source du module d'émission pour en déduire la position du trièdre à repérer.

D'autres caractéristiques et avantages de l'invention apparaîtront plus clairement à la lumière de la description qui suit et des dessins annexés, concernant un mode d'exécution particulier, en référence aux figures où:
- la figure 1 est une vue en perspective illustrant schématiquement un exemple de mise en oeuvre du procédé selon l'invention, ici pour réaliser le repérage positionnel du support mobile d'une machine de mesure tridimensionnelle à bras articulés ;
- la figure 2 est une vue en élévation du module d'émission d'un dispositif mettant en oeuvre l'invention (avec un arrachement permettant de mieux distinguer la source de rayon lumineux et l'ouverture de passage associée) ;
- la figure 3 est une coupe suivant la ligne III-III de la figure 2, montrant schématiquement les deux moteurs d'entraînement et les deux capteurs de position angulaire équipant le module d'émission.

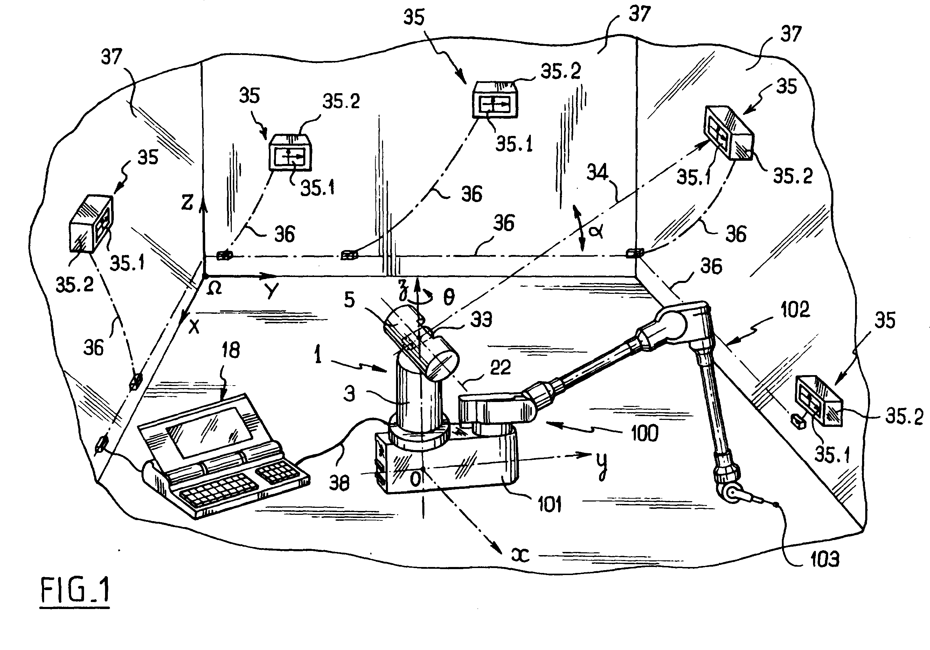

A la figure 1, on a représenté schématiquement un dispositif de repérage positionnel d'un trièdre (O,x,y,z) associé à une machine de mesure tridimensionnelle 100 du type facilement déplaçable disposée à l'intérieur d'une enceinte ayant des parois notés 37, et associée à un référentiel fixe noté (Ω,X,Y,Z). Cette machine est ici constituée par un support 101 auquel est associé le trièdre à repérer (O, x, y, z), et par un bras déformable 102 formé de plusieurs bras articulés, avec un capteur de contact 103 monté en extrémité du dernier bras articulé. Le dispositif de repérage comporte un module d'émission 1 qui est constitué d'un socle 3 solidaire du support 101 et donc fixe par rapport au trièdre (O,x,y,z), et d'une tête mobile 5 montée sur le socle 3 pour pivoter autour de l'axe z du trièdre précité.

Dans l'exemple illustré, la machine 100 repose sur le sol de l'enceinte, qui est horizontal, de sorte que l'axe z est sensiblement vertical, c'est-à-dire parallèle à l'axe Z qui est ici également vertical. Bien entendu, l'invention n'est pas limitée à cette disposition et l'axe z, ainsi que les axes x et y du trièdre à repérer, peuvent être orientés suivant des directions quelconques.

Ainsi, dans le cas le plus général, le repérage positionnel du trièdre (O,x,y,z) est subordonné à la donnée de six variables, dont trois variables donnant la position de l'origine O et, trois autres variables donnant les cosinus directeurs des axes x, y et z.

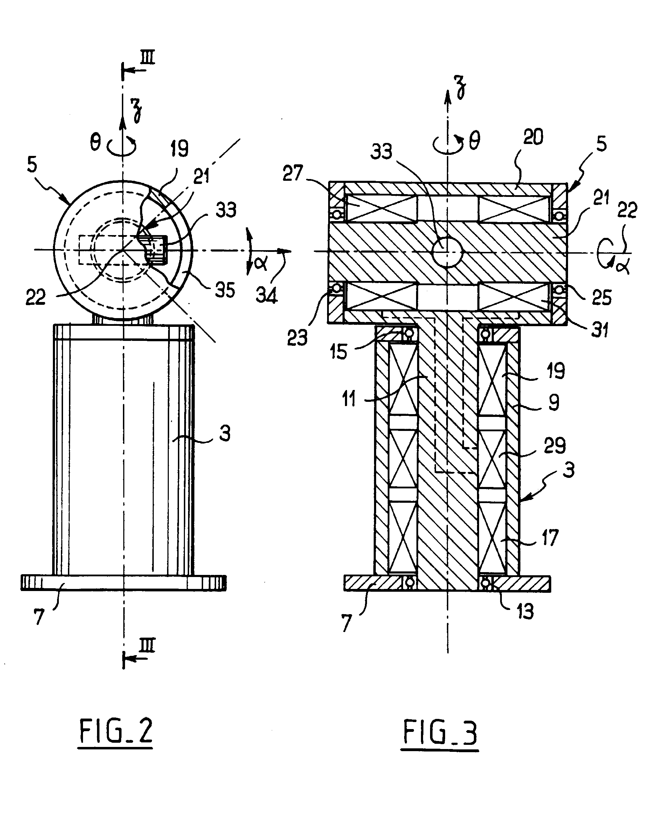

Ainsi que cela est mieux visible sur les figures 2 et 3, le socle 3 du module d'émission comporte un pied 7 de fixation et un corps cylindrique 9 solidaire du pied 7 et ayant pour axe l'axe z. Le corps cylindrique 9 est traversé par un arbre 11 qui est monté à rotation sur le socle 3 entre un roulement 13 monté sur le pied 7 et un roulement 15 monté sur une extrémité du corps cylindrique 9 opposée au pied 7. La rotation de l'arbre 11 autour de l'axe z est commandée par un moteur électrique 17 qui est alimenté par une unité de pilotage (non représentée). La position angulaire de l'arbre 11 par rapport à l'axe z est repérée par un angle θ dont la mesure est donnée par un capteur de position angulaire 19 qui est monté entre l'arbre 11 et le corps cylindrique 9 et qui est raccordé à une unité de traitement électronique 18.

L'arbre 11 est relié, par son extrémité opposée au pied 7, à la tête mobile 5. Celle-ci comporte un corps cylindrique 20 qui possède un axe 22 perpendiculaire à l'axe z, et qui est fixé en son milieu à l'arbre 11. Le corps cylindrique 20 est traversé par un arbre coaxial 21 monté à rotation autour de l'axe 22 entre deux roulements 23 et 25 disposés à chacune des extrémités dudit corps cylindrique. La rotation de l'arbre 21 autour de l'axe 22 est commandée par un moteur électrique 27 qui est relié, par l'intermédiaire d'un raccord tournant 29 disposé entre l'arbre 11 et le corps cylindrique 9, à l'unité de pilotage. La position de l'arbre 21 autour de l'axe 22 est repérée par un angle α dont la mesure est donnée par un capteur de position angulaire 31 logé dans le corps cylindrique 20 et relié, par l'intermédiaire du raccord tournant 29, à l'unité de traitement électronique 18. Les liaisons électriques entre le raccord tournant 29 et le moteur 27, et entre ce raccord tournant et le capteur 31, sont ici symbolisées par des traits en pointillé (les fils extérieurs des liaisons électriques, correspondant au câble 38 visible sur la figure 1, et servant au raccordement du moteur 17, du capteur 19 et du raccord tournant 29 à l'unité électronique 18 n'ont pas été représentés sur la vue schématique de la figure 3).

L'arbre 21 est équipé en son milieu d'une source 33 de rayon lumineux, telle qu'une source laser, qui s'étend transversalement par rapport à l'axe 22 de l'arbre 21. On remarquera que cette source est ainsi mobile en rotation à la fois par rapport à l'axe 22 et par rapport à l'axe z. Une ouverture 35 est ménagée dans le corps cylindrique 20 pour permettre le passage du rayon lumineux 34 issu de la source 33. Les positions extrêmes du rayon 34 dans sa rotation autour de l'axe 22 (angle α) sont représentées à la figure 2 en traits mixtes. La plage angulaire sera par exemple de 45° de part et d'autre d'une position médiane perpendiculaire à l'axe z. La rotation autour de l'axe z quant à elle (angle θ) n'est pas nécessairement limitée à une plage angulaire particulière. Une rotation libre autour de l'axe z confère plus de souplesse dans l'utilisation du module si l'axe z est vertical.

Le dispositif comporte également des cibles actives 35 fixées aux parois 37 associées au référentiel fixe (Ω,X,Y,Z). Le terme "cible active" utilisé ici englobe tout type de récepteur capable d'émettre un signal témoignant de son éclairement par le rayon lumineux utilisé.

Le dispositif qui vient d'être décrit permet de mettre en oeuvre le procédé de repérage positionnel selon l'invention. Dans la définition la plus générale de ce procédé, il est prévu la succession d'étapes suivantes :
- on met en place le module d'émission 1 et les cibles actives 35 ;
- on fait pivoter la source 33 du module d'émission 1 autour de l'un au moins des deux axes de rotation z et 22, le socle 3 du module restant fixe, de façon à diriger successivement le rayon lumineux émis vers chacune des cibles actives 35 de sorte que le signal délivré par chaque cible éclairée provoque la mémorisation des deux angles correspondants θ et α mesurés pour la cible éclairée par les deux capteurs de position angulaire 19 et 31 ;
- on détermine par calcul (au moyen de l'unité de traitement électronique 18), à partir des angles θ et α et des coordonnées des emplacements définis des cibles actives 35, la position du trièdre (O,x,y,z), c'est-à-dire la position de l'origine, et l'orientation des trois axes, dans le référentiel fixe (Ω,X,Y,Z).

Conformément au mode de réalisation particulier du dispositif illustré aux figures, les cibles actives 35 sont ici au nombre de cinq et, en tout état de cause, il est nécessaire de disposer d'un nombre minimum de trois cibles.

Chaque cible active 35 comporte de préférence un écran 35.1 de forme rectangulaire, qui délivre à chacun des coins de l'écran un courant électrique inversement proportionnel à la distance séparant l'impact du rayon lumineux issu de la source 33 sur ledit écran et chacun des coins de cet écran. De tels écrans sont généralement utilisés dans le domaine de l'étalonnage et du contrôle des mécanismes de commande d'orientation de rayons lumineux tels que des lasers. On pourra par exemple utiliser comme écran pour les cibles actives les capteurs du type PIN-Spot 2D fabriqués par la société américaine UDT Sensors. La cible 35 comporte également un boîtier électronique 35.2 disposé derrière l'écran 35.1 et transformant les signaux issus des quatre coins de cet écran en un signal électrique donnant les coordonnées de l'impact du rayon lumineux issu de la source 33 dans le plan de l'écran 35.1 par rapport à une origine fixe (le plus souvent située au centre de l'écran).

Ce signal est transmis, par un moyen tel que des câbles de liaison électrique 36 représentés en traits mixtes à la figure 1, à l'unité de traitement électronique 18. L'unité de traitement électronique 18 reçoit ainsi les signaux provenant de chaque cible active 35, ainsi que les valeurs des angles repérés par les capteurs de position angulaire 19, 31.

Les cibles 35 sont disposées autour du module d'émission 1 en étant sensiblement éloignées les unes des autres et à des emplacements dont les coordonnées dans le repère (Ω,X,Y,Z) sont connues et mémorisées dans l'unité de traitement électronique 18.

Conformément à une caractéristique essentielle de l'invention, la détermination de ces coordonnées est obtenue de façon automatique lors d'une étape préliminaire de calibrage. Selon cette étape préliminaire :
- on mémorise, pour une pluralité de positions différentes du socle 3 du module d'émission 1, les deux angles θ et α lus par les capteurs de position angulaire 19 et 31 de la source 33 qui correspondent à l'éclairement successif de chacune des cibles actives 35 ;
- on en déduit par calcul les positions relatives des cibles entre elles ;
- on mesure et on mémorise la distance entre deux points remarquables afin de fixer l'échelle dimensionnelle.

Les deux points remarquables précités peuvent être par exemple constitués par les emplacements de deux cibles actives 35 ou de deux positions du socle 3, la mesure étant alors effectuée manuellement puis communiquée à l'unité de traitement électronique 18. Ces points remarquables peuvent également être deux points quelconques, comme par exemple les deux extrémités d'une règle de longueur connue, auquel cas il est possible de réaliser l'étalonnage du calculateur de la machine de mesure tridimensionnelle en palpant chacune des extrémités de la règle avec le capteur de contact 103, puis d'établir une connexion entre ce calculateur et l'unité de traitement électronique 18.

Lors de cette étape préliminaire de calibrage, on utilise de préférence au moins cinq cibles actives 35 et douze positions différentes du socle 3 du module d'émission 1.

Pour la mise en oeuvre du procédé au moyen du dispositif précédemment décrit, on pilote, à l'aide de l'unité de pilotage précitée, les moteurs 17 et 27 de telle façon que le rayon lumineux 34 issu de la source 33 éclaire successivement l'écran 35.1 de chacune des cibles actives 35. A chaque pointage, la cible 35 qui reçoit le rayon lumineux transmet à l'unité de traitement électronique 18 les coordonnées de l'impact du rayon lumineux 34 sur le plan de l'écran 35.1 associé. L'unité de traitement électronique 18 mémorise alors les angles θ et α correspondant aux positions angulaires des arbres 11 et 21 relevées par les capteurs de position angulaire 19 et 31. L'unité de traitement électronique 18 combine alors ces données, pour chaque cible 35, pour en déduire les deux positions angulaires théoriques qui seraient lues par les capteurs de position 19 et 31 du module d'émission 1 si l'impact du rayon lumineux était situé exactement sur l'origine fixe du plan de l'écran 35.1. Les deux angles théoriques ainsi déterminés pour chaque cible active sont ensuite transmis à un module de calcul (non representé) de l'unité de traitement électronique 18. Lorsque toutes les cibles actives 35 ont été éclairées et que tous les angles théoriques correspondants ont été transmis au module de calcul, ce dernier détermine par calcul, à partir de ces angles et des coordonnées des emplacements des cibles actives 35 dans le repère fixe (Ω,X,Y,Z), la position du trièdre (O,x,y,z) dans le référentiel (Ω,X,Y,Z).

Selon une variante particulière du procédé de repérage positionnel, il est possible de disposer toutes les cibles actives 35 dans un plan commun qui contient ou non l'origine O du trièdre à repérer (O,x,y,z). Le repérage peut alors être considéré comme, non plus tridimensionnel, mais bidimensionnel, et ce surtout lorsque le plan commun est horizontal, car le socle du module est simplement posé sur un plan horizontal.

Dans ce cas, on utilise au moins quatre cibles 35 et six positions différentes du socle 3 de module d'émission 1.

Dans le cas particulier où l'axe z du module est sensiblement orthogonal au plan commun des cibles et où le positionnement est tel que l'angle α est nul, alors seul l'angle θ varie pour l'éclairement successifs des cibles. Si l'axe z n'est pas exactement orthogonal au plan des cibles, l'orientation exacte de l'axe z est déterminée à partir de la seule position de l'impact du rayon lumineux sur l'écran de détection photo-électrique de chaque cible.

L'invention n'est pas limitée au mode de réalisation qui vient d'être décrit, mais englobe au contraire toute variante reprenant, avec des moyens équivalents, les caractéristiques essentielles énoncées plus haut.

Par exemple, bien que dans l'exemple illustré les cibles actives 35 comportent un écran large facilitant l'opération de pointage de cet écran par le rayon lumineux, il serait également possible d'utiliser des cibles actives ayant un écran de réception du rayon lumineux plus étroit et transmettant à l'unité de traitement électronique un simple signal du type "tout ou rien" correspondant à un état d'éclairement ou de non-éclairement de la cible par le rayon lumineux 34. De telles cibles actives seraient alors analogues à des cellules photo-électriques classiques. Dans ce cas, les angles θ et α qui repèrent la position angulaire des arbres 11 et 21 du module d'émission 1 sont directement transmis au module de calcul, le signal issu des cibles actives 35 ayant alors pour seule fonction de déclencher la mémorisation de ces positions angulaires.

Par ailleurs, même s'il a été décrit un dispositif dans lequel les signaux issus des cibles actives 35 sont transmis à l'unité de traitement électronique 18 par des câbles de liaison électrique, il est également possible d'assurer cette liaison au moyen d'un système émetteurrécepteur sans fil. De manière différente, il sera également possible d'utiliser des cibles passives réfléchissantes associées à un capteur photo-électrique disposé sur le module d'émission pour recevoir le rayon lumineux réfléchi par chacune des cibles.

Enfin, bien que dans l'exemple illustré le module d'émission 1 ait été monté sur un support mobile de machine de mesure tridimensionnelle, ce module d'émission pourra bien entendu être rapporté sur tout autre objet dont on souhaite déterminer la position et l'orientation dans l' espace.

On est ainsi parvenu à mettre en oeuvre une technique de repérage positionnel d'un trièdre dans l'espace, à partir de références angulaires, qui est plus précise et fiable que les techniques antérieures précitées, grâce à un auto-calibrage du dispositif utilisé.

## Revendications

1. Procédé de repérage positionnel d'un trièdre (O,x,y,z) dans l'espace, comportant les étapes suivantes :
- on met en place un module d'émission (1) comprenant un socle (3) fixe par rapport au trièdre à repérer (O,x,y,z), une source (33) de rayon lumineux montée sur le socle (3) pour pivoter autour de deux axes distincts non parallèles entre eux (z,22), et deux capteurs de position angulaire (19, 31) associés aux mouvements de rotation correspondants de la source (33) par rapport au socle (3);
- on dispose autour du module d'émission (1), en des emplacements définis par rapport à un référentiel fixe (Ω,X,Y,Z), une pluralité de cibles (35) aptes à délivrer un signal électrique témoignant de leur éclairement par le rayon lumineux émis par la source (33) ;
- on fait pivoter la source (33) du module d'émission (1) autour de l'un au moins des deux axes de rotation (z, 22), le socle (3) du module restant fixe, de façon à diriger successivement le rayon lumineux émis vers chacune des cibles (35) de sorte que le signal délivré par chaque cible éclairée provoque la mémorisation des deux angles (θ, α) correspondants mesurés pour ladite cible éclairée par les deux capteurs de position angulaire (19, 31) ;
- on détermine par calcul, à partir de ces angles et des coordonnées des emplacements définis des cibles (35), la position du trièdre (O,x,y,z) dans le référentiel fixe (Ω,X,Y,Z);
caractérisé en ce que les emplacements des cibles (35) sont définis dans le référentiel fixe (Ω,X,Y,Z) lors d'une étape préliminaire de calibrage au cours de laquelle :
- on mémorise, pour une pluralité de positions différentes du socle (3) du module d'émission (1), les deux angles (θ, α) correspondant à l'éclairement successif de chacune des cibles (35) ;
- on en déduit par calcul les positions relatives des cibles entre elles ;
- on mesure et on mémorise la distance entre deux points remarquables, tels que deux cibles ou deux positions du socle, afin de fixer l'échelle dimensionnelle.

2. Procédé selon la revendication 1, caractérisé en ce que, pour l'étape préliminaire de calibrage, on utilise au moins cinq cibles (35) et douze positions différentes du socle (3) du module d'émission (1).

3. Procédé selon la revendication 1, caractérisé en ce que les cibles (35) sont disposées dans un plan commun, en particulier un plan horizontal.

4. Procédé selon la revendication 3, caractérisé en ce que, pour l'étape préliminaire de calibrage, on utilise au moins quatre cibles (35) et six positions différentes du socle (3) du module d'émission (1).

5. Procédé selon l'une des revendications précédentes, dans lequel chaque cible (35) inclut un écran de détection photo-électrique (35.1) de surface sensiblement plus grande que la section du rayon lumineux pour fournir un signal donnant la position de l'impact du rayon lumineux sur cet écran (35.1) par rapport à une origine fixe dudit écran, caractérisé par le fait que l'on combine, pour chaque cible éclairée successivement, le signal issu de l'écran (35.1) de cette cible avec les signaux issus des deux capteurs de position angulaire (19, 31) de la source (33) du module d'émission (1) pour en déduire la position du trièdre (O,x,y,z) à repérer.

## Claims

1. A method of locating the spatial position of a frame of reference (O,x,y,z), the method comprising the following steps:
. the following are put into place, an emitter module (1) comprising a stand (3) that is fixed relative to the frame of reference (O,x,y,z) that is to be located, a light beam source (33) mounted on the stand (3) to pivot about two distinct non-parallel axes (z, 22), and two angular position sensors (19, 31) associated with the corresponding rotary movements of the source (33) relative to the stand (3);
. a plurality of targets (35) are disposed around the emitter module (1) in locations that are defined relative to a fixed frame of reference (Ω,X,Y,Z), which targets are suitable for delivering an electrical signal indicating that they are being illuminated by the light beam emitted by the source (33);
. the source (33) of the emitter module (1) is caused to pivot about at least one of the two axes of rotation (z, 22), the stand (3) of the module remaining stationary, so as to direct the emitted light beam to each of the targets (35) in succession so that the signal delivered by each illuminated target causes the corresponding angles (Θ, α) measured by the two angular position sensors (19, 31) for each illuminated target to be stored;
. said angles and the coordinates of the defined locations of the targets (35) are used to compute the position of the frame of reference (O,x,y,z) in the fixed frame of reference (Ω,X,Y,Z);
characterized in that the locations of the targets (35) are defined in the fixed frame of reference (Ω,X,Y,Z) during a preliminary calibration step during which:
. the two angles (Θ, α) corresponding to successive illumination of each of the targets (35) are stored for a plurality of different positions of the stand (3) of the emitter module (1);
. the relative positions between the various targets are deduced therefrom by computation; and
. the distance between two remarkable points, such as two targets or two positions of the base is measured and stored in order to fix the dimensional scale.

2. A method according to claim 1, characterized in that, for the preliminary calibration step, at least five targets (35) and twelve different positions of the stand (3) of the emitter module (1) are used.

3. A method according to claim 1, characterized in that the targets (35) are disposed in a common plane, in particular a horizontal plane.

4. A method according to claim 3, characterized in that, for the preliminary calibration step, at least four targets (35) and six different positions of the stand (3) of the emitter module (1) are used.

5. A method according to anyone of the preceding claims, in which each target (35) includes a photoelectric detection screen (35.1) of area that is significantly greater than the section of the light beam to provide a signal giving the position of the impact of the light beam on said screen (35.1) relative to a fixed origin of said screen, characterized in that, for each successively illuminated target, the signal from the screen (35.1) of this target is combined with the signals from the two angular position sensors (19, 31) of the source (33) of the emitter module (1) to deduce therefrom the position of the frame of reference (O,x,y,z) to be located.

## Patentansprüche

1. Verfahren zur Positionsbestimmung eines Trieders (O, x, y, z) im Raum, umfassend die folgenden Schritte:
- man installiert einen Sendermodul (1) mit einem Sockel (3), der relativ zu dem zu lokalisierenden Trieder (O, x, y, z) feststeht, einer Lichtstrahlquelle (33), die zum Schwenken um zwei verschiedene, zueinander nicht parallele Achsen (z, 22) auf dem Sockel (3) angebracht ist, und zwei Sensoren (19, 31) zum Erfassen der Winkelposition, die mit den entsprechenden Drehbewegungen der Quelle (33) relativ zum Sockel (3) verbunden sind;
- man ordnet an Stellen, die relativ zu einem feststehenden Bezugssystem (Ω, X, Y, Z) festgelegt sind, um den Sendermodul (1) herum eine Vielzahl Zielelemente (35) an, die dazu geeignet sind, ein elektrisches Signal zu liefern, das deren Belichtung durch den von der Quelle (33) ausgesandten Lichtstrahl angibt;
- man läßt die Quelle (33) des Sendermoduls (1), wobei der Sockel (3) des Moduls ortsfest bleibt, derart um mindestens eine der beiden Drehachsen (z, 22) schwenken, daß man den ausgesandten Lichtstrahl nacheinander in Richtung jedes der Zielelemente (35) leitet, so daß das von jedem angestrahlten Zielelement gelieferte Signal die Speicherung zweier entsprechender Winkel (θ, α) bewirkt, die für das genannte angestrahlte Zielelement mittels der beiden Sensoren (19, 31) zum Erfassen der Winkelposition gemessen werden;
- man bestimmt rechnerisch ausgehend von diesen Winkeln und den festgelegten Lagekoordinaten der Zielelemente (35) die Position des Trieders (O, x, y, z) in dem feststehenden Bezugssystem (Ω, X, Y, Z);
dadurch **gekennzeichnet,** daß die Standorte der Zielelemente (35) in dem feststehenden Bezugssystem (Ω, X, Y, Z) während eines vorbereitenden Schrittes der Kalibrierung festgelegt werden, während dessen
- man für eine Vielzahl unterschiedlicher Positionen des Sockels (3) des Sendermoduls (1) die beiden Winkel (θ, α) entsprechend dem aufeinanderfolgenden Bestrahlen jedes der Zielelemente (35) speichert;
- man davon rechnerisch die relativen Positionen der Zielelemente zueinander ableitet; und
- man den Abstand zwischen zwei markanten Punkten mißt und speichert, wie beispielsweise zwischen zwei Zielelementen oder zwei Positionen des Sockels, um den dimensionalen Maßstab festzusetzen.

2. Verfahren nach Anspruch 1, dadurch **gekennzeichnet,** daß man für den vorbereitenden Schritt der Kalibrierung mindestens fünf Zielelemente (35) und zwölf unterschiedliche Positionen des Sockels (3) des Sendermoduls (1) verwendet.

3. Verfahren nach Anspruch 1, dadurch **gekennzeichnet,** daß die Zielelemente (35) in einer gemeinsamen Ebene, und insbesondere in einer horizontalen Ebene, angeordnet sind.

4. Verfahren nach Anspruch 3, dadurch **gekennzeichnet,** daß man für den vorbereitenden Schritt der Kalibrierung mindestens vier Zielelemente (35) und sechs unterschiedliche Positionen des Sockels (3) des Sendermoduls (1) verwendet.

5. Verfahren nach einem der vorhergehenden Ansprüche, bei dem jedes Zielelement (35) einen photoelektrischen Detektorschirm (35.1) enthält, mit einer Fläche, die wesentlich größer ist als der Querschnitt des Lichtstrahls, um ein Signal zu liefern, das die Auftreffposition des Lichtstrahls auf diesem Schirm (35.1) relativ zu einem feststehenden Nullpunkt des genannten Schirms angibt, dadurch **gekennzeichnet,** daß man für jedes aufeinanderfolgend angestrahlte Zielelement das aus dem Schirm (35.1) dieses Zielelements abgegebene Signal mit den Signalen kombiniert, die aus den beiden Sensoren (19, 31) zum Erfassen der Winkelposition der Quelle (33) des Sendermoduls (1) abgegeben werden, um daraus die Position des zu lokalisierenden Trieders (O, x, y, z) abzuleiten.
